# FASCICULE DE BREVET EUROPEEN

(11) **EP 1 971 953 B1**
(45) Date de publication et mention de la délivrance du brevet: **22.07.2009**
(21) Numéro de dépôt: 07717706.1
(22) Date de dépôt: 04.01.2007
(51) Int. Cl.: G06K 7/12, B07C 3/14, G06K 7/10

(54) **DISPOSITIF DE LECTURE DE CODES A BARRES FLUORESCENTES AVEC PRE-DETECTION D'INTENSITE**
VORRICHTUNG ZUM LESEN VON FLUORESZIERENDEN STRICHCODES MIT INTENSITÄTSVORERKENNUNG
DEVICE FOR READING FLUORESCENT BAR CODES WITH PREDETECTION OF INTENSITY

(30) Priorité: 05.01.2006 FR 0650046
(43) Date de publication de la demande: 24.09.2008
(73) Titulaire: Solystic, 94257 Gentilly (FR)
(72) Inventeur: PHILIPPE, Agnès, F-94130 Nogent sur Marne (FR); MITTE, Claude, F-95370 Montigny les Cormeilles (FR)
(74) Mandataire: Prugneau, Philippe
(86) Numéro de dépôt international: PCT/FR2007/050609
(87) Numéro de publication internationale: WO 2007/077404

(56) Documents cités:
- WO-A-97/11790
- FR-A1- 2 761 178
- FR-A1- 2 798 869
- US-A- 6 123 263

## Description

L'invention concerne une machine de tri postal avec un dispositif de lecture d'un code sous la forme d'une marque fluorescente sur la surface d'un envoi postal afin de trier automatiquement l'envoi dans les sorties de tri de la machine.

En particulier, l'invention concerne un dispositif de lecture d'une marque imprimée en encre fluorescente sur la surface de l'envoi. La marque fluorescente est, par exemple, un code à barres fluorescentes, un code à points fluorescents, une marque d'affranchissement apposée sur un timbre postal etc... Un code à barres fluorescentes est constitué de bâtonnets dont la séquence une fois décodée peut par exemple être représentative d'un code postal. Ce code à barres peut être en une dimension ou en deux dimensions.

De manière générale, un dispositif de lecture de code à barres fluorescentes en machine de tri comprend un boîtier muni d'une fenêtre sur une de ses parois. Un dispositif d'acquisition d'images incluant un système d'éclairage et une caméra est disposé dans le boîtier. Le système d'éclairage et la caméra sont orientés en direction de la fenêtre. Typiquement, on utilise une caméra CCD avec un capteur à 256 niveaux de gris pour la lecture de code à barres fluorescentes.

Dans la machine de tri, les envois postaux sont déplacés sur chant de sorte que leur surface comportant la marque fluorescente soit disposée contre la fenêtre du dispositif de lecture.

En fonctionnement, le système d'éclairage du dispositif de lecture émet une lumière dont la longueur d'onde excite l'encre fluorescente. L'encre fluorescente excitée présente la propriété d'émettre de la lumière dont la longueur d'onde est différente de la longueur d'onde d'excitation. Par exemple, on excite l'encre fluorescente avec une lumière bleue ou des ultraviolets dont la longueur d'onde est comprise entre 300 et 470 nanomètres, en réponse, la lumière émise par l'encre fluorescente excitée a une longueur d'onde déterminée d'environ 600 nanomètres.

Pour augmenter le taux de lecture de la marque fluorescente, il est nécessaire que la lumière émise par l'encre fluorescente soit le moins possible parasitée par la lumière réfléchie par l'enveloppe ou par l'information d'adresse en contraste visible. Pour cela, il est connu d'utiliser un dispositif avec un filtre optique disposé entre la fenêtre et la caméra pour ne laisser passer que la longueur d'onde l'émission de l'encre fluorescente excitée. Le traitement de l'image nécessaire au décodage du code à barres fluorescentes est ainsi facilité. Un tel dispositif est décrit dans la demande de brevet français FR2715240. La revendication 1 est délimitée contre cette demande de brevet.

Toutefois, l'intensité lumineuse des marques fluorescentes excitées peut varier d'un facteur dix dans la gamme de niveau de gris de la caméra CCD ce qui a pour effet de diminuer le taux de lecture. La variation d'intensité lumineuse est principalement due aux réglages de l'imprimante, à l'encre utilisée et surtout au type et à la couleur du support sur lequel l'encre fluorescente est imprimée.

Par exemple, une marque fluorescente imprimée sur un support poreux émettra de la lumière avec une faible intensité alors qu'une marque fluorescente imprimée sur un support papier de bonne qualité ou plastique émettra avec une forte intensité. De même, une marque fluorescente imprimée sur un support de couleur sombre ou sur lequel des graphismes ou du texte sombres sont déjà imprimés, émettra une lumière de faible intensité alors que sur un support de couleur claire la lumière émise sera de forte intensité.

Dans les dispositifs de lecture de code à barres fluorescentes actuels, la sensibilité de lecture est réglée de manière fixe par apprentissage pour obtenir le meilleur compromis de taux de lecture pour l'ensemble du spectre des marques fluorescentes et des supports.

Il en résulte que, pour certaines marques fluorescentes excitées, le dispositif de lecture reçoit une intensité lumineuse trop faible pour être exploitée alors que pour d'autres marques fluorescentes, le dispositif est saturé.

WO 97/11790 divulgue une machine de tri postal comprenant un dispositif d'acquisition d'images d'envois postaux. Le dispositif comprend une caméra avec un système d'éclairage pour former une image de la surface d'un envoi. Afin de localiser l'adresse sur l'envoi postal, une marque fluorescente est superposée sur l'adresse. Un détecteur positionné en amont de la caméra et comprenant une source UV détecte cette marque afin d'informer la caméra de la présence (localisation et orientation) d'une adresse à être captée.

US-A-6 123 263 divulgue un dispositif portatif de lecture d'un code sous la forme d'une marque fluorescente sur la surface d'un envoi postal. Le dispositif de lecture comprend dans un boîtier un dispositif d'acquisition d'images incluant une caméra avec un système d'éclairage pour former une image d'un envoi à travers une fenêtre formée dans une paroi du boîtier. Le dispositif comprend aussi un système de pré-détection d'intensité lumineuse dans le même boîtier qui est apte à fournir un signal (première image) représentatif de l'intensité lumineuse émise par une marque fluorescente pré-détectée sur l'envoi, et une unité de commande qui asservit ledit système d'acquisition audit signal de pré-détection avant de capter une seconde image de la marque fluorescente.

Le but de l'invention est de remédier à ces inconvénients en proposant un dispositif de lecture de marques fluorescentes qui puisse lire une large gamme de marques fluorescentes imprimées sur divers supports.

A cet effet, l'invention a pour objet une machine de tri postal avec un dispositif de lecture d'un code sous la forme d'une marque fluorescente sur la surface d'un envoi postal, le dispositif de lecture comprenant dans un boîtier un dispositif d'acquisition d'images incluant une caméra avec un système d'éclairage pour former une image d'un envoi à travers une première fenêtre formée dans une paroi du boîtier, **caractérisée en ce que** le dispositif de lecture comprend en outre un système de pré-détection d'intensité lumineuse et une unité de commande, ledit système de pré-détection comprenant dans un boîtier muni d'une seconde fenêtre un système d'éclairage pour exciter à travers ladite seconde fenêtre ladite marque fluorescente et un détecteur pour mesurer l'intensité du rayonnement lumineux émis par ladite marque fluorescente excitée, ladite seconde fenêtre étant distante et disposée en amont de ladite première fenêtre selon le déplacement de l'envoi dans la machine de tri, et en ce que ledit détecteur est apte à fournir un signal de pré-détection représentatif de ladite intensité lumineuse à ladite unité de commande pour asservir ledit dispositif d'acquisition audit signal de pré-détection. Cet agencement permet d'avoir un asservissement dynamique de la caméra et du système d'éclairage lors du déplacement de l'envoi dans la machine.

Selon un mode de réalisation particulier de l'invention, l'unité de commande asservit l'intensité lumineuse du système d'éclairage audit signal de pré-détection.

Selon un autre mode de réalisation particulier de l'invention, l'unité de commande asservit le gain du signal de sortie de la caméra audit signal de pré-détection.

Selon un autre mode de réalisation particulier de l'invention, l'unité de commande asservit l'intensité lumineuse du système d'éclairage et le gain du signal de sortie de la caméra audit signal de pré-détection.

Selon un mode de réalisation particulier de l'invention, le système de pré-détection se présente sous la forme d'une photodiode, d'un phototransistor ou d'un photomultiplicateur monté dans un boîtier avec des diodes électroluminescentes qui éclairent une fenêtre formée dans une paroi du boîtier.

Avec cet agencement, le dispositif de lecture selon l'invention peut donc asservir de façon dynamique le système d'éclairage et/ou la caméra en fonction de l'intensité lumineuse émise par une encre fluorescente et obtenir ainsi un taux de lecture élevé.

Le dispositif de lecture est décrit plus en détail ci-après et illustré par les dessins. Cette description n'est donnée qu'à titre d'exemple indicatif et nullement limitatif de l'invention.
La figure 1 est une représentation schématique de la surface d'un envoi postal comportant une information d'adresse et un code à barres fluorescentes.
La figure 2 est une représentation schématique en vue de dessus du dispositif de lecture selon l'invention.
La figure 3 est une représentation graphique de l'intensité lumineuse émise par l'encre fluorescente imprimée sur un support de couleur claire.
La figure 4 est une représentation graphique de l'intensité émise par l'encre fluorescente imprimée sur un support de couleur sombre.

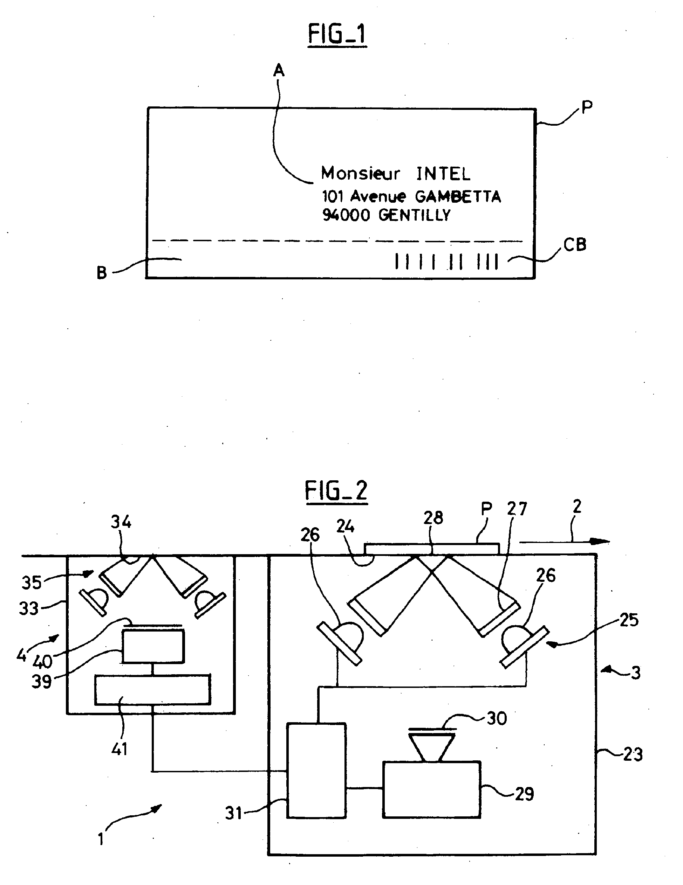

Sur la figure 1, on a illustré un envoi postal P ayant une surface sur laquelle est apposée une information d'adresse de distribution A et un code à barres CB imprimé avec une encre fluorescente. Dans notre exemple de réalisation, l'encre fluorescente émet une lumière dont la longueur d'onde est d'environ 600 nanomètres pour une longueur d'onde d'excitation correspondant à des ultraviolets ou à la couleur bleue.

Les codes à barres fluorescentes CB sont généralement imprimés par machine dans une même zone de la surface de chaque envoi postal P. Typiquement, la zone d'impression se situe dans la bande inférieure B de la surface de l'envoi, comme délimité en pointillés sur la figure 1.

On a illustré sur la figure 2, un dispositif de lecture 1 selon l'invention pour la lecture de marques fluorescentes, par exemple un code à barres fluorescentes CB imprimé sur un envoi postal P déplacé sur chant dans la machine de tri selon le sens de la flèche 2.

Le dispositif de lecture 1 comprend, selon l'invention, une tête de lecture de code à barres fluorescentes 3 et un système de pré-détection 4 de l'intensité lumineuse d'un code à barres fluorescentes excité.

En particulier, la tête de lecture 3 comprend un boîtier ou boîte noire 23 opaque à la lumière et muni d'une fenêtre 24 sur une de ses parois. Dans le boîtier 23 on a illustré un dispositif d'acquisition d'images incluant un système d'éclairage 25 et une caméra 29 qui, selon l'invention, sont connectés à une unité de traitement / commande 31 pour l'asservissement.

Le système d'éclairage 25 est constitué, par exemple, de deux barrettes de diodes électroluminescentes 26 disposées de façon symétrique par rapport à l'axe médian de la fenêtre 24 et couvrant au moins la hauteur de la bande B.

Chaque barrette est composée d'une pluralité de diodes électroluminescentes 26 disposées verticalement les unes en dessous des autres de sorte à couvrir verticalement la hauteur de la bande B. De plus, chaque diode électroluminescente 26 est orientée et associée à un dispositif optique 27 pour concentrer le rayonnement lumineux de l'ensemble des diodes 26 de manière uniforme dans une zone rectangulaire verticale 28 de la fenêtre 24. Les diodes électroluminescentes 26 émettent une lumière dans la longueur d'onde d'excitation de l'encre fluorescente. Typiquement, la longueur d'onde d'excitation correspond à la couleur bleue ou à des ultraviolets dont la longueur d'onde est comprise entre 300 et 470 nanomètres.

Le capteur de la caméra CCD 29 ("Charge-Coupled Device" Dispositif à Couplage de Charges) à 256 niveaux de gris est orienté perpendiculairement au sens de déplacement 2 pour faire l'acquisition d'une image de la bande B lors du déplacement de l'envoi dans la zone éclairée 28.

De manière classique, on place un filtre optique passe bande 30 devant l'objectif de la caméra 29.

Lors de son déplacement dans le sens de la flèche 2, l'envoi postal P a sa surface comprenant le code à barres fluorescentes CB qui est plaquée contre la fenêtre 24. Il en résulte que les diodes électroluminescentes 26 excitent uniformément la bande B de l'envoi postal P.

En réponse au rayonnement d'excitation incident, la lumière émise par les bâtonnets fluorescents a une longueur d'onde d'environ 600 nanomètres correspondant à la couleur orange. Cette lumière est filtrée par le filtre optique passe bande 30 centré sur la longueur d'onde de la couleur orange pour les raisons évoquées précédemment.

Dans la tête de lecture 3, le système d'éclairage 25 et la caméra CCD 29 sont connectés à l'unité de traitement / commande 31 qui commande l'intensité d'éclairage et/ou le gain analogique du signal de sortie de caméra ; et décode le code à barres fluorescentes CB à partir d'un traitement de l'image reçue de la caméra CCD 29.

Selon l'invention, le dispositif de lecture 1 comprend également un système de pré-détection 4 délivrant un signal de pré-détection correspondant à l'intensité lumineuse émise par un code à barres fluorescentes excité. Le système de pré-détection 4 est disposé en amont de la tête de lecture 3 pour asservir la tête de lecture 3 en fonction du signal de pré-détection qui est alors utilisé comme consigne d'asservissement.

Le système de pré-détection 4 comprend un boîtier 33 muni d'une fenêtre 34 sur une de ses parois, un système d'éclairage 35 composé de diodes électroluminescentes disposées de part et d'autre de la fenêtre 34 et un détecteur ponctuel 39 équipé d'un filtre optique 40 et relié à une unité de traitement 41. Le filtre optique passe bande 40 est centré sur la longueur d'onde d'émission de l'encre fluorescente excitée, afin d'éviter que des signaux lumineux parasites, comme la lumière diffusée ou réfléchie par l'envoi postal, ne perturbent la détection.

Le système de pré-détection 4 a un fonctionnement similaire à celui de la tête de lecture 3. Les diodes du système de pré-détection 4 émettent la même longueur d'onde d'excitation que les diodes de la tête de lecture 3 mais avec une intensité lumineuse fixe. Le détecteur ponctuel 39 peut par exemple être une photodiode, un phototransistor ou un photomultiplicateur avec un gain fixe du signal en sortie.

En particulier, selon l'invention l'unité de traitement 41 du système de pré-détection 4 est connectée à l'unité de traitement / commande 31 de la tête de lecture 3 pour asservir la sensibilité de la caméra 29 et/ou l'intensité de l'éclairage 25 en fonction de l'intensité lumineuse pré-détectée.

Le système de pré-détection 4 est disposé en amont de la tête de lecture 3 pour effectuer la lecture en trois étapes. Premièrement, on détecte l'intensité lumineuse sur un envoi postal P en déplacement selon le sens de la flèche 2 au moyen du système de pré-détection 4. Deuxièmement, on commande la sensibilité de la tête de lecture 3. Troisièmement, on lit le code à barres fluorescentes au moyen de la tête de lecture 3.

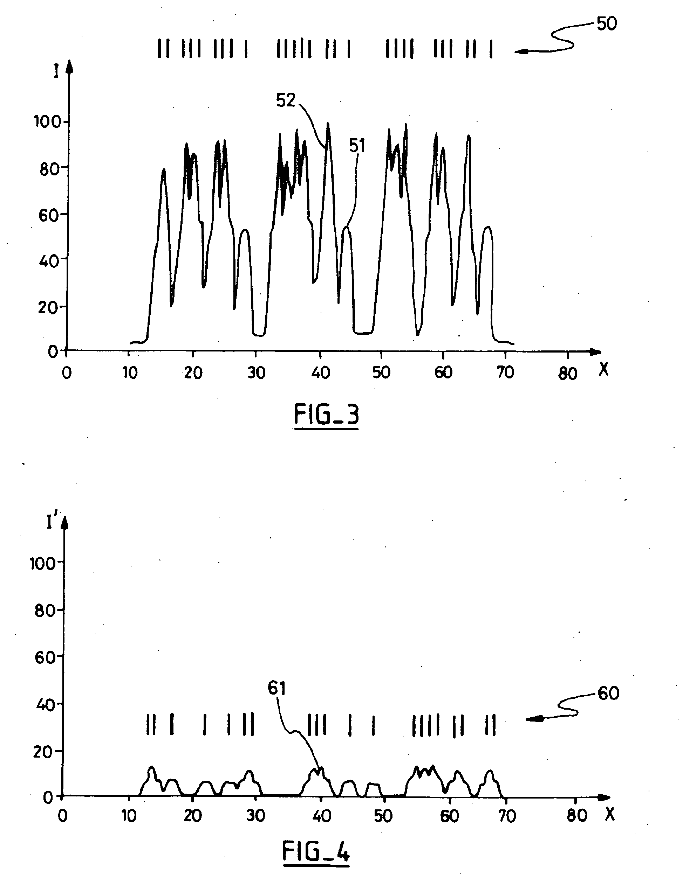

Dans la première étape, le détecteur ponctuel 39 reçoit la lumière émise par les barres fluorescentes excitées et la transforme en un signal électrique. Deux signaux électriques détectés sont représentés sur les figures 3 et 4.

Sur la figure 3, on a représenté le signal électrique I(x) en millivolt en fonction du déplacement x en millimètre de l'envoi postal P selon le sens de la flèche 2. On a également représenté les bâtonnets 50 et leur position en fonction du déplacement x pour illustrer la correspondance avec le signal électrique I(x). Dans l'exemple de la figure 3, I(x) est représentatif de l'intensité lumineuse émise par les bâtonnets imprimés en encre fluorescente sur un support de couleur claire, par exemple une enveloppe blanche.

Le signal I(x) est composé d'une pluralité de pics correspondant à l'intensité lumineuse émise par un ou plusieurs bâtonnets. En particulier, le pic 51 correspond à un bâtonnet, alors que le pic 52 de plus forte intensité correspond à deux bâtonnets trop proches l'un de l'autre pour être distingués par système de pré-détection 4 pour une largeur du champ de vision fixée. L'amplitude du pic 52 correspond à la somme des intensités lumineuses émises par deux bâtonnets très proches.

Dans l'exemple de réalisation selon l'invention, on détermine dans l'unité de traitement 41, l'amplitude maximale du signal I(x) qui est prise comme valeur de consigne. Le signal peut faire l'objet d'un traitement préalable pour éviter qu'une amplitude maximale isolée et aberrante soit prise pour représenter l'intensité lumineuse du code à barres fluorescentes. Dans l'exemple de réalisation de la figure 3, la valeur de consigne est 100 millivolts et correspond au pic 52. Il est entendu que cette amplitude du signal électrique est fonction de l'amplification opérée sur le signal.

Dans la deuxième étape, la valeur de consigne est transmise par l'unité de traitement 41 du système de pré-détection 4 à l'unité de traitement / commande 31 de la tête de lecture 3 pour commander le système d'éclairage et / ou la sensibilité de la caméra 29. La correspondance entre la valeur de consigne déterminée par le système de pré-détection 4 et le réglage de la sensibilité de la tête de lecture 3 est fixée par un apprentissage préalable sur un lot test d'envois postaux. Pour cet apprentissage, on définit plusieurs plages de valeurs de consigne. A chacune de ces plages de valeurs, on associe un réglage optimal de la tête de lecture 3, c'est à dire une valeur de commande de l'intensité d'éclairage et/ou du gain du signal analogique en sortie de caméra.

La valeur de consigne de 100 millivolts pour l'exemple de la figure 3 est considérée comme représentative d'une forte intensité lumineuse qui pourrait saturer l'image, entraînant un faible taux de lecture. Par conséquent, la valeur de consigne reçue par l'unité de traitement /commande 31 est traitée pour commander soit une baisse de l'intensité lumineuse du système d'éclairage 25, soit une diminution du gain du signal analogique de sortie de la caméra, soit les deux.

Avec le dispositif selon l'invention, l'image du code à barres fluorescentes n'est pas saturée et le taux de lecture est augmenté.

Sur la figure 4, on a représenté le signal électrique I'(x) correspondant à l'intensité lumineuse émise par les bâtonnets imprimés en encre fluorescente sur un support de couleur sombre, par exemple une enveloppe grise. Sur la figure 4, on a également représenté les bâtonnets 60 et leur position en fonction du déplacement x.

La valeur de consigne est calculée comme précédemment et correspond au pic portant la référence numérique 61 dont l'amplitude est 15 millivolts. Avec un réglage fixe du système d'éclairage et du gain de la caméra, l'image obtenue serait trop peu contrastée pour avoir un taux de lecture acceptable.

La valeur de consigne de 15 millivolts est reçue par l'unité de traitement / commande 31 et traitée pour commander soit une hausse de l'intensité lumineuse du système d'éclairage 25, soit une augmentation du gain du signal analogique de sortie de la caméra 29, soit les deux.

Par conséquent, le contraste est augmenté et le taux de lecture est amélioré.

Dans une variante de réalisation de l'invention, on dispose plusieurs systèmes de pré-détection d'intensité lumineuse les uns au-dessus des autres afin de couvrir une zone de détection plus large. On peut donc pré-détecter l'intensité lumineuse d'un code à différentes positions sur la surface d'un envoi postal. Avec cet agencement, on peut lire des codes à barres fluorescentes imprimés par des machines de tri de différentes origines.

Dans une autre variante, le système de pré-détection peut être intégré dans le boîtier de la tête de lecture qui comporte alors deux fenêtres et un écran opaque entre les deux fenêtres.

## Revendications

1. Machine de tri postal avec un dispositif de lecture d'un code sous la forme d'une marque fluorescente sur la surface d'un envoi postal (P), le dispositif de lecture comprenant dans un boîtier (23) un dispositif d'acquisition d'images incluant une caméra (29) avec un système d'éclairage (25) pour former une image d'un envoi à travers une première fenêtre (24) formée dans une paroi du boîtier (23), **caractérisée en ce que** le dispositif de lecture comprend en outre un système de pré-détection d'intensité lumineuse (4) et une unité de commande (31), ledit système de pré-détection (4) comprenant dans un boîtier (33) muni d'une seconde fenêtre un système d'éclairage (35) pour exciter à travers ladite seconde fenêtre ladite marque fluorescente et un détecteur (39) pour mesurer l'intensité du rayonnement lumineux émis par ladite marque fluorescente excitée, ladite seconde fenêtre étant distante et disposée en amont de ladite première fenêtre (24) selon le déplacement de l'envoi dans la machine de tri, et **en ce que** ledit détecteur (39) est apte à fournir un signal de pré-détection représentatif de ladite intensité lumineuse à ladite unité de commande (31) pour asservir ledit dispositif d'acquisition audit signal de pré-détection.

2. Machine de tri postal selon la revendication 1, dans laquelle l'unité de commande (31) asservit l'intensité lumineuse du système d'éclairage (25) du dispositif d'acquisition audit signal de pré-détection.

3. Machine de tri postal selon l'une des revendications 1 ou 2, dans laquelle l'unité de commande (31) asservit le gain du signal de sortie de la caméra (29) du dispositif d'acquisition audit signal de pré-détection.

4. Machine de tri postal selon l'une des revendications 1 à 3, dans laquelle le détecteur du système de pré-détection (4) se présente sous la forme d'une photodiode (39) montée dans le boîtier (33) du système de pré-détection avec le système d'éclairage du système de pré-détection (4) qui se présente sous la forme de diodes électroluminescentes éclairant ladite deuxième fenêtre formée dans une paroi du boîtier.

5. Machine de tri postal selon l'une des revendications 1 à 3, dans laquelle le détecteur du système de pré-détection (4) se présente sous la forme d'un phototransistor (39) monté dans le boîtier (33) du système de pré-détection avec le système d'éclairage du système de pré-détection (4) qui se présente sous la forme de diodes électroluminescentes éclairant ladite deuxième fenêtre formée dans une paroi du boîtier.

6. Machine de tri postal selon l'une des revendications 1 à 3, dans laquelle le détecteur du système de pré-détection (4) se présente sous la forme d'un photomultiplicateur (39) monté dans le boîtier (33) du système de pré-détection avec le système d'éclairage du système de pré-détection (4) qui se présente sous la forme de diodes électroluminescentes éclairant ladite deuxième fenêtre formée dans une paroi du boîtier.

## Claims

1. Postal sorting machine with a reading device for a code in the form of a fluorescent mark on the surface of a postal item (P), the reading device comprising in a housing (23) an images acquisition device including a camera (29) with a lighting system (25) for forming an item image through a first window (24) formed in a wall of the housing (23), **characterized in that** the reading device further comprises a light intensity pre-detection system (4) and a control unit (31), said pre-detection system (4) comprising in a housing (33) provided with a second window a lighting system (35) to excite said fluorescent mark through said second window and a detector (39) for measuring radiation intensity emitted by said excited fluorescent mark, said second window being distal and provided upstream of said first window (24) according to displacement of the item in the sorting machine, and **in that** said detector (39) is able to provide a pre-detection signal representing said light intensity to said control unit (31) to drive said acquisition device to said pre-detection signal.

2. Postal sorting machine according to claim 1, in which the control unit (31) drives the light intensity of lighting system (25) of the acquisition device to said pre-detection signal.

3. Postal sorting machine according to one of claims 1 or 2, in which the control unit (31) drives the output signal gain of the camera (29) of the acquisition device to said pre-detection signal.

4. Postal sorting machine according to one of claims 1 to 3, in which the detector of pre-detection system (4) is in the form of a photodiode (39) mounted in the housing (33) of the pre-detection system with the lighting system of the pre-detection system (4) which is in the form of light-emitting diodes lighting said second window formed in a wall of the housing.

5. Postal sorting machine according to one of claims 1 to 3, in which the detector of pre-detection system (4) is in the form of a phototransistor (39) mounted in the housing (33) of the pre-detection system with the lighting system of the pre-detection system (4) which is in the form of light-emitting diodes lighting said second window formed in a wall of the housing.

6. Postal sorting machine according to one of claims 1 to 3, in which the detector of pre-detection system (4) is in the form of a photomultiplier (39) mounted in the housing (33) of the pre-detection system with the lighting system of the pre-detection system (4) which is in the form of light-emitting diodes lighting said second window formed in a wall of the housing.

## Patentansprüche

1. Postsortiermaschine mit einer Vorrichtung zum Lesen eines Codes in Form einer fluoreszierenden Markierung auf der Oberfläche einer Postsendung (P), wobei die Vorrichtung zum Lesen in einem Gehäuse (23) eine Bilderfassungsvorrichtung umfasst, welche eine Kamera (29) mit einem Beleuchtungssystem (25) zum Abbilden eines Bildes einer Sendung durch ein erstes, in einer Wand des Gehäuses (23) ausgebildetes Fenster (24) beinhaltet, **dadurch gekennzeichnet, dass** die Vorrichtung zum Lesen außerdem ein System zur Vorerkennung der Beleuchtungsintensität (4) und eine Steuereinheit (31) umfasst, wobei das System zur Vorerkennung (4) in einem, mit einem zweiten Fenster ausgestatteten Gehäuse (33) ein Beleuchtungssystem (35) zum Anregen der fluoreszierenden Markierung durch das zweite Fenster und einen Sensor (39) zum Messen der Intensität der durch die angeregte fluoreszierende Markierung emittierten Lichtstrahlung umfasst, wobei das zweite Fenster gemäß der Bewegung der Sendung in der Sortiermaschine beabstandet von dem und stromaufwärts zu dem ersten Fenster (24) angebracht ist, und dass der Sensor (39) geeignet ist, ein repräsentatives Vorerkennungssignal der Beleuchtungsintensität an die Steuereinheit (31) zu liefern, um die Erfassungsvorrichtung mit dem Vorerkennungssignal zu steuern.

2. Postsortiermaschine gemäß Anspruch 1, in welcher die Steuereinheit (31) die Beleuchtungsintensität des Beleuchtungssystems (25), welches Bestandteil der Erfassungsvorrichtung ist, mit dem Vorerkennungssignal steuert.

3. Postsortiermaschine gemäß einem der Ansprüche 1 oder 2, in welcher die Steuereinheit (31) die Verstärkung des von der Kamera (29) der Erfassungsvorrichtung ausgehenden Signals mit dem Vorerkennungssignal steuert.

4. Postsortiermaschine gemäß einem der Ansprüche 1 bis 3, in welcher der Sensor des Vorerkennungssystems (4) die Form einer Photodiode (39) aufweist, welche im Gehäuse (33) des Systems zur Vorerkennung mit dem Beleuchtungssystem des Systems zur Vorerkennung (4) in Form von Elektrolumineszenzdioden montiert ist, wobei das zweite, in einer Wand des Gehäuses ausgebildete Fenster beleuchtet wird.

5. Postsortiermaschine gemäß einem der Ansprüche 1 bis 3, in welcher der Sensor des Systems zur Vorerkennung (4) die Form eines Phototransistors (39) aufweist, welcher im Gehäuse (33) des Systems zur Vorerkennung mit dem Beleuchtungssystem des Systems zur Vorerkennung (4) in Form von Elektrolumineszenzdioden montiert ist, wobei das zweite, in einer Wand des Gehäuses ausgebildete Fenster beleuchtet wird.

6. Postsortiermaschine gemäß einem der Ansprüche 1 bis 3, in welcher der Sensor des Systems zur Vorerkennung (4) die Form eines Photomultiplikators (39) aufweist, welcher im Gehäuse (33) des Systems zur Vorerkennung mit dem Beleuchtungssystem des Systems zur Vorerkennung (4) in Form von Elektrolumineszenzdioden montiert ist, wobei das zweite, in einer Wand des Gehäuses ausgebildete Fenster beleuchtet wird
